**Europäisches Patentamt**

**European Patent Office**

**Office européen des brevets**

(19)

(11) Veröffentlichungsnummer: **0 088 160**
**B1**

# EUROPÄISCHE PATENTSCHRIFT

(45) Veröffentlichungstag der Patentschrift:
**18.03.87**

(51) Int. Cl.⁴: **F 16 J 9/06,** F 16 J 9/00

(21) Anmeldenummer: **82111104.4**

(22) Anmeldetag: **01.12.82**

(54) **Kolbenring.**

(30) Priorität: **09.03.82 DE 3208396**

(43) Veröffentlichungstag der Anmeldung:
**14.09.83 Patentblatt 83/37**

(45) Bekanntmachung des Hinweises auf die Patenterteilung:
**18.03.87 Patentblatt 87/12**

(84) Benannte Vertragsstaaten:
**DE FR GB IT**

(56) Entgegenhaltungen:
**DE-A-1 952 890**
**DE-B-1 948 048**
**DE-C-1 087 855**
**US-A-3 627 333**

(73) Patentinhaber: **GOETZE AG, Bürgermeister-
Schmidt- Strasse 17, D-5093 Burscheid 1 (DE)**

(72) Erfinder: **Brauers, Bert, Dr., Hauptstrasse 35,
D-5068 Blecher- Odenthal (DE)**
Erfinder: **Kierst, Reiner, Theodor- Fliedner- Strasse
7, D-5060 Bergisch- Gladbach 2 (DE)**
Erfinder: **Morsbach, Martin, Dr.- Ing., Finkenweg
16, D-5093 Burscheid (DE)**

LIBER, STOCKHOLM 1987

## Beschreibung

Die Erfindung.betrifft einen Kolbenring, insbesondere axial niedrig bauender Ölabstreifring, bestehend aus einer Spreizfeder aus Bandmaterial und mindestens einer Lamelle, die zum einen auf mehreren in Umfangsrichtung gesehen radial sich erstreckenden federnden Zungen der Spreizfeder mindestens teilweise aufliegt und sich zum anderen radial an, aus den federnden Zungen etwa axial abgebogenen Schenkeln abstützt.

Durch die DE - C - 1 087 855 ist bereits eine tangential, axial und radial federnde aus Draht gefertigte Spannfeder für Ölabstreifringe bekannt, die mit zwei Lamellen zusammenwirkt. Für das radiale und das axiale Spannen der einzelnen Lamellen sind jeweils besondere selbstfedernde Windungsteile der Spreizfeder derart angeordnet, daß die anliegenden Windungsteile wechselweise an der einen oder der anderen Lamelle anliegen. Der überwiegende Teil der Spreizfeder und folglich auch deren Biegebereich sind axial zwischen den beiden Lamellen angeordnet, so daß sich eine relativ große axiale Bauhöhe ergibt, die den heutigen Anforderungen, insbesondere an Ölabstreifringe, nicht mehr gerecht wird. Des weiteren ist es relativ schwierig und somit recht teuer, derartige gewundene Spreizfedern herzustellen.

Ein weiterer Kolbenring, insbesondere aber eine Spreizfeder für diesen Kolbenring ist durch die US - A - 3 627 333 bekannt. Die hier verwendete Feder besteht aus Bandmaterial und ist in Umfangsrichtung gesehen mit von beiden Umfangsflächen ausgehenden alternierenden Einschnitten versehen. Im Bereich der äußeren Umfangsfläche der Spreizfeder sind ebenfalls alternierend etwa axial abgebogene Schenkel vorgesehen, die zur radialen Abstützung jeweils einer Lamelle dienen. Die federnden radial verlaufenden Zungen dienen hierbei als Auflagefläche für die beiden Lamellen.

Bei dieser Feder besteht der Biegebereich lediglich aus den angebogenen Füßchen, während der eigentliche Federbereich ausschließlich zwischen den Lamellen angeordnet ist. Durch diese konstruktive Auslegung der Feder werden nur sehr kurze Hebelarme und daraus resultierend eine harte Federkennung erreicht. Im Betriebszustand findet zwischen Feder und Lamelle eine permanente Relativbewegung statt. Der dadurch bedingte Verschleiß (Sekundärverschleiß zwischen Feder und Lamelle) führt im Falle einer harten Federkennung zu einem stärkeren Abfall der Tangentialkraft als bei einer weicheren Federkennung.

Der Erfindung liegt die Aufgabe zugrunde, ausgehend von einem im gattungsbildenden Teil des Hauptpatentanspruches beschriebenen Kolbenring, diesen mit einfachen Mitteln so zu verbessern, daß er zum einen eine axial extrem niedrige Bauhöhe und die Spreizfeder zum anderen eine weiche Federkennung aufweist.

Gleichzeitig soll eine geringe radiale Wandstärke der Lamelle erzielt werden, um ein möglichst hohes Formfüllvermögen des Systems zu gewährleisten.

Diese Aufgabe wird erfindungsgemäß dadurch gelöst, daß der Biegebereich der Spreizfeder in Umfangsrichtung gesehen im wesentlichen radial hinter der Lamelle angeordnet ist. Durch die Verlagerung des Biegebereiches, im wesentlichen radial hinter die Lamelle, wird auf einfache Weise neben der Reduzierung der axialen Bauhöhe eine Federkennung erzielt, die jedem beliebigen Anwendungsfall angepaßt werden kann.

Die Erfindung ist neben Spreizfedern aus Bandmaterial auch bei Spreizfedern aus gewundenem Draht anwendbar. Spreizfedern aus Drahtmaterial weisen aufgrund ihrer Windungen, im Gegensatz zu gestanzten Federn aus Bandmaterial, in der Regel mehrere Biegebereiche auf. Gemäß der Erfindung ist der Hauptbiegebereich jedoch radial hinter der Lamelle angeordnet, um auf diese Weise die Federkennung auch bei Spreizfedern aus gewundenem Draht im für den Kolbenring vorteilhaften Sinne beeinflussen zu können.

Zur konstruktiven Gestaltung des Biegebereiches sowohl bei Spreizfedern aus Band- als auch aus Drahtmaterial bieten sich eine Reihe von Lösungen an. Eine ist darin zu sehen, daß der Biegebereich ein gebogenes beziehungsweise gewundenes etwa eckiges, rundes oder ovales Querschnittsprofil aufweist. Eine weitere Möglichkeit besteht darin, daß der Biegebereich aus einer Vielzahl von Lappen besteht, die sich, von den abgebogenen Schenkeln ausgehend, radial entgegengesetzt zur Lamelle in Richtung auf den Nutgrund der Kolbennut erstrecken, ohne den Nutboden jedoch zu berühren. Ob nun die eine oder die andere bevorzugte Möglichkeit angewendet wird ist vom jeweiligen Anwendungsfall abhängig. Hier spielen u.a. die radiale Tiefe und die axiale Höhe der Kolbennut, oder die gewünschte Federkennung der Spreizfeder bei der konstruktiven Auslegung des Kolbenringes im Sinne der Erfindung eine wichtige Rolle.

Um auch eine gute axiale Anpressung der Lamelle zu erzielen, wird vorgeschlagen, daß mindestens ein Teil der federnden Zungen im Bereich ihres freien Endes axial abgebogen ist und sich an der korrespondierenden Nutwand abstützen.

Bei einem Kolbenring, insbesondere bei einem Ölabstreifring, der aus wenigstens zwei Lamellen und mindestens einer Spreizfeder besteht, deren radial gerichtete federnde Zungen zwischen jeweils zwei Lamellen angeordnet sind, wird einem weiteren Gedanken der Erfindung gemäß vorgeschlagen, daß die federnden Zungen, ausgehend vom Biegebereich in Umfangsrichtung gesehen, sich alternierend in Richtung auf die beiden Lamellen, einen axialen Druck auf sie ausübend, erstrecken.

Weiterhin wird vorgeschlagen, daß mindestens ein Teil der federnden Zungen im Bereich ihrer freien Enden axial in Richtung auf die jeweilige korrespondierende Lamelle abgebogen ist. Hierbei soll neben der radialen Federung eine zusätzliche axiale Federung der Spreizfeder erzielt werden.

Weiterhin vorteilhaft ist zu sehen, daß der zwischen den federnden Zungen und dem Biegebereich der Spreizfeder in deren Übergangsbereich gebildete Winkel zwischen 10 und 30° liegt. Damit ist der Vorteil verbunden, daß die Lamelle beziehungsweise die Lamellen im Betriebszustand die so erzeugte Schräge hochwandern können, wobei sie sich naturgemäß aufgrund des an den Auflagepunkt eingeleiteten Momentes selber schrägstellen. Im Betrieb stellt sich folgender Zustand ein: Die Lamelle beziehungsweise die Lamellen liegen sowohl an der Schräge des Übergangsbereiches, als auch im Bereich der freien Enden der federnden Zungen mit linienförmigem Kontakt an. Durch das zwangsweise Schrägstellen (Vertwisten) der Lamelle beziehungsweise der Lamellen liegt diese des weiteren auch mit Linienkontakt an der jeweiligen Nutwand an, wobei eine sehr gute Abdichtung erzielt wird. Derartige Kolbenringe sind ebenfalls als Kompressions-Kolbenringe auch bei extremen Situationen einsetzbar.

Die Erfindung ist in der Zeichnung dargestellt und wird im folgenden näher beschrieben. Es zeigen:

Figuren 1 - 8 unterschiedliche Ausbildungen von Kolbenringen

Figuren 9, 10 Stanzbilder gemäß den vorangegangenen Figuren.

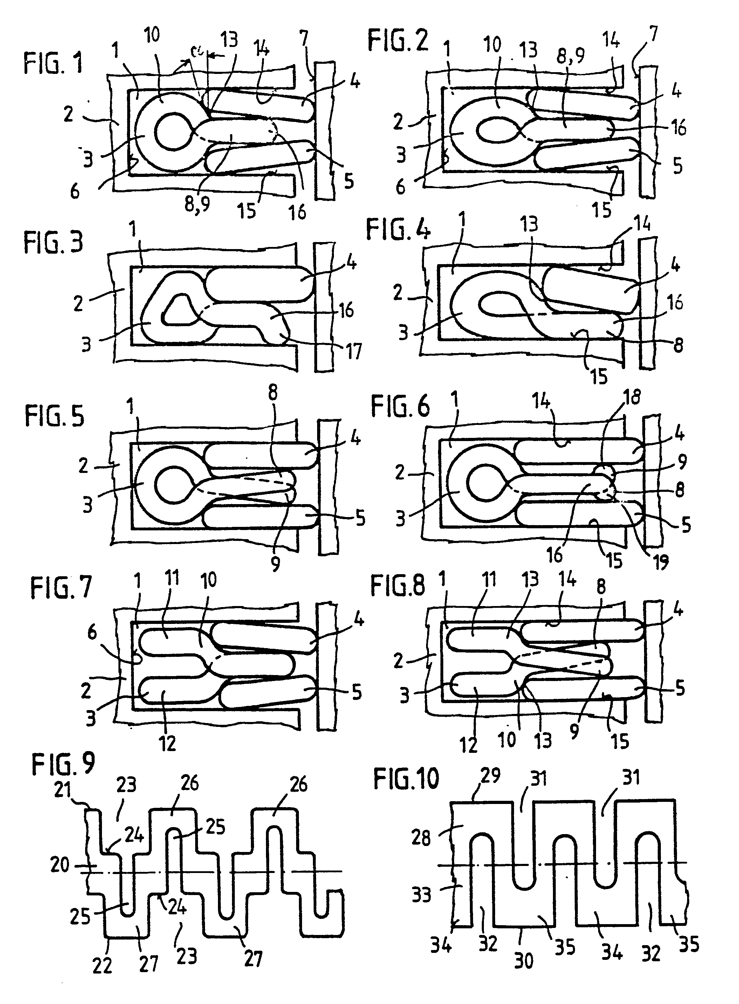

Die in den Figuren 1 - 8 dargestellten Kolbenringe sind jeweils in der Nut 1 eines Kolbens 2 eingesetzt. Die Kolbenringe bestehen aus einer Spreizfeder 3 aus Bandmaterial und einer Lamelle 4 (Figuren 3, 4) oder zwei Lamellen 4, 5 (Figuren 1, 2, 5 - 8), die durch die sich nicht am Nutgrund 6 abstützende Spreizfeder 3 an die korrespondierende Zylinderwand 7 gedrückt werden. Die Spreizfeder 3 besteht aus radial federnden Zungen 8, 9, die als Auflagefläche für die Lamelle 4 beziehungsweise die Lamellen 4, 5 dienen und in einem Biegebereich 10 auslaufen. Dieser ist, um eine weiche Federkennung der Spreizfeder 3 zu erhalten im wesentlichen radial hinter der Lamelle 4 beziehungsweise den Lamellen 4,5 angeordnet. Der Biegebereich 10 weist, wie dargestellt, die unterschiedlichsten Querschnittsprofile auf, er kann etwa kreisförmig (Figuren 1, 5, 6), oval (Figuren 2, 4), etwa trapezförmig (Figur 3) oder aus U-förmigen Lappen 11, 12 (Figuren 7, 8) bestehend ausgebildet sein. Wie schon angesprochen, erstreckt sich der Hauptbiegebereich 10 der Spreizfeder 3 radial hinter der beziehungsweise den Lamellen 4, 5, wobei im Übergangsbereich 13 der jeweiligen federnden Zungen 8 und/oder 9 zum Biegebereich 10 für die jeweilige Lamelle 4 und/oder 5 eine radiale Stützfläche gebildet wird. Der im Übergangsbereich 13 gebildete Winkel $\alpha$ liegt bei ca. 15°.

Im Betriebszustand werden sich die Lamellen 4, 5 entsprechend den Figuren 1 und 2, indem sie die Schräge des Übergangsbereiches 13 hochwandern, unter 3-Punkt-Berührung mit linienförmigem Kontakt am Übergangsbereich 13, an der korrespondierenden Nutwand 14, 15 und im Endbereich 16 der federnden Zungen 8, 9 abstützen.

Beim Kolbenring gemäß Figur 3 ist die Spreizfeder 3 im Endbereich 16 der federnden Zungen 8 etwa axial in Richtung auf die korrespondierende Nutwand 15 abgebogen 17 und übt sich dort axial abstützend, eine axiale Kraft auf die Lamelle 4 aus, die sich dadurch ganzflächig an die korrespondierende Nutwand 14 anlegt.

Die Spreizfeder 3 gemäß Figur 4 weist auch nur eine Lamelle 4 auf. Hier liegen die federnden Zungen 8 ganzflächig an der Nutwand 15 an, während sich die Lamelle 4, wie bei den Figuren 1 und 2 schon angesprochen, unter 3-Punkt-Berührung am Übergangsbereich 13, der Nutwand 14 und dem Endbereich 16 der federnden Zungen 8 anlegt.

In Figur 6 ist eine Spreizfeder 3 mit vom Biegebereich 10 ausgehend axial federnden Zungen 8, 9 abgebildet, die alternierend - in Umfangsrichtung der Spreizfeder 3 gesehen - auf die beiden Lamellen 4, 5 einen axialen Druck ausüben. Durch diesen axialen Druck werden die Lamellen 4, 5, wie schon in Figur 3 beschrieben, ganzflächig an die korrespondierenden Nutwände 14, 15 gedrückt.

Ähnlich ist Figur 6 zu sehen. Auch hier werden die Lamellen 4, 5 ganzflächig an die jeweilige Nutwand 14, 15 gedrückt. Der Endbereich 16 der federnden Zungen 8, 9 ist alternierend etwa axial auf die jeweilige Lamelle 4, 5 abgebogen 18, 19, wobei sie in diesem Bereich eine axiale Kraft auf dieselbe ausübt.

Figur 7 zeigt eine Spreizfeder, deren Biegebereich 10 U-förmig ausgebildet ist. Die Radialschenkel (Lappen) 11, 12 erstrecken sich bis in die unmittelbare Nähe des Nutgrundes 6, ohne diesen jedoch zu berühren. Auch hier tritt eine 3-Punkt-Berührung ein, wie sie schon in den Figuren 1, 2 und 4 beschrieben worden ist.

Die Spreizfeder 3 gemäß Figur 8 ist ähnlich der in Figur 7 dargestellten mit dem Unterschied, daß die federnden Zungen 8, 9 ausgehend vom Biegebereich 10 in axialer Richtung abgebogen sind und in ähnlicher Weise, wie in Figur 5 angesprochen, eine ganzflächige Anlage der Lamellen 4, 5 an der jeweiligen Nutwand 14, 15 bewirken.

Die Figuren 9, 10 zeigen unterschiedliche Stanzbilder. Das Stanzteil gemäß Figur 9 ist geeignet Spreizfedern 3 entsprechend den Figuren 1 - 6 herzustellen, wohingegen das Stanzteil gemäß Figur 10 für die Herstellung von Spreizfedern, wie sie in den Figuren 7 und 8 dargestellt sind, geeignet ist.

Bei dem in Figur 9 dargestellten Stanzteil 20, welches aus einem Metallband besteht, werden alternierend von der einen 21 und der anderen Kante 22 ausgehend etwa rechteckige Teile 23 ausgestanzt. Ausgehend von deren Endbereichen 24, erstrecken sich Schlitze 25 in Richtung auf die jeweilige korrespondierende Kante 21 oder 22. Je weiter sich die Schlitze 25 bis zur anderen Kante 21 oder 22 erstrecken, desto weicher wird die Federkennung der Spreizfeder 3. Die Grenze ist von den jeweiligen einzelnen Materialien, wie Stärke, Breite, Werkstoff, abhängig. Die verbleibenden Zungen 26, 27 werden dann alternierend in die Ausnehmungen 23 gebogen und bilden so die federnden Zungen 8, 9 der Spreizfeder 3. Je nach Umbiegung bleiben die Zungen 8, 9 in einer Ebene (Figuren 1, 2, 4) oder aber sie üben eine Axialkraft auf die jeweilige Lamelle 4, 5 aus (Figuren 3, 5, 6).

Das Stanzteil 28 gemäß Figur 10 ist ebenfalls aus einem Metallband gefertigt. Ausgehend von seinen Kanten 29, 30 erstrecken sich alternierend etwa U-förmige Einschnitte 31, 32 in Richtung auf die korrespondierende Kante 29 oder 30. Für die Abmessungen der Einschnitte gelten die gleichen Bedingungen, wie sie schon für Figur 9 beschrieben worden sind. Der von der Mittellinie betrachtet untere Bereich 33 wird hierbei (z.B. ausgehend von der Mittellinie) nur gebogen, und zwar dergestalt, daß die gebildeten Zungen 34, 35 alternierend nach oben oder unten, unter Bildung des in den Figuren 7 und 8 dargestellten U-förmigen Profiles, abgewinkelt werden.

## Patentansprüche

1. Kolbenring, insbesondere axial niedrig bauender Ölabstreifring, bestehend aus einer Spreizfeder (3), insbesondere aus Bandmaterial und mindestens einer Lamelle (4, 5), die zum einen auf mehreren in Umfangsrichtung gesehen radial sich erstreckenden federnden Zungen (8, 9) der Spreizfeder mindestens teilweise aufliegt und sich zum anderen radial an, aus den federnden Zungen (8, 9) etwa axial abgebogenen Schenkeln abstützt, dadurch gekennzeichnet, daß der Biegebereich (10) der Spreizfeder (3) in Umfangsrichtung gesehen im wesentlichen radial hinter der Lamelle (4, 5) angeordnet ist.

2. Kolbenring nach Anspruch 1, dadurch gekennzeichnet, daß der Biegebereich (10) der Spreizfeder (3) ein etwa rundes oder ovales Querschnittsprofil bildet.

3. Kolbenring nach den Ansprüchen 1 und 2, dadurch gekennzeichnet, daß der Biegebereich (10) aus einer Vielzahl von Lappen (11, 12) besteht, die sich, von den abgebogenen Schenkeln ausgehend, radial entgegengesetzt zur Lamelle (4, 5) in Richtung auf den Nutgrund (6) der Kolbennut (1) erstrecken.

4. Kolbenring nach Anspruch 3, dadurch gekennzeichnet, daß sich die Lappen (11, 12), ohne den Nutgrund (6) zu berühren, bis in unmittelbare Nähe desselben erstrecken.

5. Kolbenring nach den Ansprüchen 1 bis 4, dadurch gekennzeichnet, daß mindestens ein Teil der federnden Zungen (8, 9) im Bereich ihres freien Endes (16) axial in Richtung auf die Nutwand (14, 15) abgebogen ist.

6. Kolbenring, bestehend aus mindestens zwei Lamellen und mindestens einer Spreizfeder, deren radial gerichtete federnde Zungen zwischen jeweils zwei Lamellen angeordnet sind nach den Ansprüchen 1 bis 5, dadurch gekennzeichnet, daß die federnden Zungen (8, 9), ausgehend vom Biegebereich (10), im Umfangsrichtung gesehen sich alternierend in Richtung auf die beiden Lamellen (4, 5), einen axialen Druck auf sie ausübend, erstrecken.

7. Kolbenring nach Anspruch 6, dadurch gekennzeichnet, daß mindestens ein Teil der federnden Zungen (8, 9) im Bereich ihrer freien Enden (16) axial in Richtung auf die korrespondierende Lamelle (4, 5) abgebogen ist.

8. Kolbenring nach den Ansprüchen 1 bis 7, dadurch gekennzeichnet, daß der zwischen den federnden Zungen (8, 9) uund dem Biegebereich (10) der Spreizfeder (3) in deren Übergangsbereich (13) gebildete Winkel zwischen 10 und 30° liegt.

9. Kolbenring nach den Ansprüchen 1 bis 8, dadurch gekennzeichnet, daß die Lamelle beziehungsweise die Lamellen (4, 5) im Betriebszustand sowohl in dem beziehungsweise den Übergangsbereichen (13) und an der jeweiligen Nutwand (14, 15), als auch im Bereich des freien Endes (16) der federnden Zungen (8, 9) mit linienförmigem Kontakt anliegen.

## Claims

1. Piston ring, especially an axially narrow oil control ring, comprising an expander spring (3) made particularly of strip material, and at least one rail (4, 5) which rests at least partially on a number of resilient lugs (8, 9) formed in the expander spring and extending radially from a circumferential aspect, and which is supported radially on arms bent roughly axially into the resilient lugs (8, 9), characterized by the fact that the bent portion (10) of the expander spring (3) from a circumferential aspect is essentially disposed radially behind the rail (4, 5).

2. Piston ring according to Claim 1, characterized by the fact that the bent portion (10) of the expander-spring (3) has a roughly round or oval cross-sectional profile.

3. Piston ring according to Claims 1 and 2, characterized by the fact that the bent portion (10) is composed of a plurality of tabs (11, 12) proceeding from the bent arms and extending radially away from the rail (4, 5) towards the groove root (6) of the piston groove (1).

4. Piston ring according to Claim 3, characterized by the fact that the tabs (11, 12) extend very close up to the groove root (6) without touching it.

5. Piston ring according to Claims 1 to 4, characterized by the fact that at least a part of the resilient lugs (8, 9) in the region of their free end (16) is bent axially towards the groove wall (14, 15).

6. Piston ring consisting of at least two rails and at least one expander spring the radially oriented resilient lugs of which are disposed between two rails according to Claims 1 to 5, characterized by the fact that from a circumferential aspect the resilient lugs (8, 9) proceeding from the bent portion (10) extend alternately in the direction of the two rails (4, 5), exerting an axial pressure thereon.

7. Piston ring according to Claim 6, characterized by the fact that at least a part of the resilient lugs (8, 9) in the region of their free end (16) is bent axially towards the corresponding rail (4, 5).

8. Piston ring according to Claims 1 to 7, characterized by the fact that the angle formed between the resilient lugs (8, 9) and the bent portion (10) at the transition zone (13) of the expander spring (3) is between 10° and 30°.

9. Piston ring according to Claims 1 to 8, characterized by the fact that in operating condition the rail or rails (4, 5) has/have line contact both at the transition zone(s) (13), against the respective groove walls (14, 15) and in the region of the free end (16) of the resilient lugs (8, 9).

**Revendications**

1. Segment de piston, en particulier segment racleur d'huile de faible extension axiale constitué d'un ressort d'écartement (3) en matériau en bande et d'au moins une lamelle (4, 5) qui d'une part est appliquée au moins partiellement par plusieurs languettes élastiques (8, 9) du ressort s'étendant radialement, considéré en direction de la périphérie et d'autre part prend appui radialement sur des bras repliés sensiblement axialement par les languettes élastiques (8, 9), caractérisé en ce que la zone de flexion (10) du ressort d'écartement (3), considéré en direction périphérique, est disposée essentiellement radialement en arrière les lamelles (4, 5).

2. Segment de piston selon la revendication 1, caractérisé en ce que la zone de flexion (10) de ressort d'écartement (3) a un profil de section sensiblement rond ou oval.

3. Segment de piston selon les revendications 1 et 2, caractérisé en ce que la zone de flexion (10) est constituée d'une pluralité de pattes (11, 12), qui, partant des bras repliés, s'étendent en direction du fond de la rainure (6) du piston, radialement à l'opposé de la lamelle (4, 5).

4. Segment de piston selon la revendication 3, caractérisé en ce que les pattes (11, 12), sans toucher le fond (6) de la rainure, s'étendent jusqu'au voisinage immédiat de celui-ci.

5. Segment de piston selon les revendications 1 à 4, caractérisé en ce qu'au moins une partie des languettes élastiques (8, 9) est repliée axialement en direction de la paroi (4, 5) de la rainure au voisinage de son extrémité libre (16).

6. Segment de piston, consistant en au moins deux lamelles et au moins un ressort d'écartement, dont des languettes élastiques orientées radialement sont disposées entre deux lamelles, conformement à une des revendications 1 à 5, caractérisé en ce que les languettes élastiques (8, 9), en partant de la zone de flexion (10) s'étendant, considéré suivant la périphérie, alternativement en direction des deux lamelles (4, 5), en exerçant une pression axiale sur celle-ci.

7. Segment de piston selon la revendication 6, caractérisé en ce qu'au moins une partie des languettes élastiques (8, 9) est repliée au voisinage de leurs extrémités libres (16) axialement en direction des lamelles correspondantes (4, 5).

8. Segment de piston selon les revendications 1 à 7, caractérisé en ce que l'angle formé entre les languettes élastiques (8, 9) et la zone de flexion (10) du ressort d'écartement (3) dans sa zone de transition (13) est compris entre 10° et 30°.

9. Segment de piston selon les revendications 1 à 8, caractérisé en ce que la lamelle, ou les lamelles (4, 5) en état de fonctionnement sont appliquées par des contacts linéaires ainsi bien dans la, ou les, zone de transition (13) et sur la paroi correspondante (14, 15) de la rainure, que dans la zone des extrémités libres (16) des languettes élastiques (8, 9).

FIG. 1

FIG. 2

FIG. 3

FIG. 4

FIG. 5

FIG. 6

FIG. 7

FIG.8

FIG. 9

FIG.10